# EUROPEAN PATENT SPECIFICATION

(11) **EP 1 253 169 B1**
(45) Date of publication and mention of the grant of the patent: **15.03.2006**
(21) Application number: 02009403.3
(22) Date of filing: 25.04.2002
(51) Int. Cl.: C08K 5/105, C08K 5/00, C08L 23/00, C08K 5/134

(54) **Degradation inhibitor for resin material, chlorine water-resistant resin composition and method for inhibiting degradation**
Degradierungsverzögerer für Harzmateriale, chlorierteswasserbeständige Harzzusammensetzung und Methode zur Verzögerung der Degradierung
Agent de retardement de dégradation pour des résines, résines résistantes à l'eau chlorée, et méthode pour retarder la dégradation

(30) Priority: 27.04.2001 JP 2001133066; 29.03.2002 JP 2002094440
(43) Date of publication of application: 30.10.2002
(73) Proprietor: API Corporation, Osaka-shi, Osaka 541-0046 (JP); MITSUBISHI CHEMICAL CORPORATION, Tokyo 108-0014 (JP)
(72) Inventor: Ozaki, Yoshihiro, Bunkyo-ku, Tokyo, 113-0034 (JP); Ohnishi, Akiyoshi, Yokkaichi-shi, Mie 510-8530 (JP); Nishiki, Machiko, Yokkaichi-shi, Mie 510-8530 (JP); Takahashi, Hiroshi, Aoba-ku, Yokohama-shi, Kanagawa 227-8502 (JP)
(74) Representative: Weber, Thomas

(56) References cited:
- US-A- 5 883 286
- PATENT ABSTRACTS OF JAPAN vol. 1998, no. 05, 30 April 1998 (1998-04-30) & JP 10 007850 A (MITSUBISHI CHEM CORP;YOSHITOMI FINE CHEM KK), 13 January 1998 (1998-01-13)
- PATENT ABSTRACTS OF JAPAN vol. 1998, no. 05, 30 April 1998 (1998-04-30) & JP 10 006376 A (MITSUBISHI CHEM CORP;YOSHITOMI FINE CHEM KK), 13 January 1998 (1998-01-13)

## Description

### FIELD OF THE INVENTION

The present invention relates to a degradation inhibitor used for inhibiting degradation of resin materials caused by chlorine, and a resin composition superior in chlorine water resistance. More particularly, the present invention relates to a resin composition affording a formed article superior in chlorine water resistance, which shows less decrease in mechanical strength and less coloring, prevents abrasion of resin surface to be in contact with water, particularly decrease in the thickness of a pipe, and which can maintain the shape and strength of a resin material over a long period of time, even in a long-term use in the environment where chlorine is present, particularly in the environment where water or hot water containing chlorine is present, a degradation inhibitor used for providing such a chlorine water-resistant resin composition, and to a method for inhibiting degradation of resin materials caused by chlorine, which method comprises use of the degradation inhibitor.

### BACKGROUND OF THE INVENTION

Conventional synthetic resin materials such as polyolefin, polycarbonate, polyethylene terephthalate, polyurethane and the like contain various antioxidants to prevent oxidation during form-processing and use of products. Of these antioxidants, hindered phenol compounds, such as the compounds described in JP-B-38-17164, JP-B-39-4620, JP-B-42-9651 and the like, are known to be useful as an antioxidant of synthetic resin materials, particularly, polyolefin resin and the like. Phosphorus antioxidants, such as the compounds described in JP-B-56-5417, JP-B-56-32339, JP-A-52-106879, JP-B-50-35096, JP-A-5-178870 and the like are also known to be useful as an antioxidant of synthetic resin materials such as polyolefin resin and the like.

However, when a synthetic resin material containing an antioxidant is used in the environment where chlorine is present, particularly in the environment where water or hot water containing chlorine is present, the antioxidant effect is markedly degraded comparatively in a short time, thus resulting in decreased mechanical strength, change in the shape such as decrease in thickness etc., and coloring.

For water purification, for example, tap water is sterilized or disinfected with liquid chlorine that absorbed chlorine gas or chlorine water prepared by dissolving sodium hypochlorite. Because tap water containing chlorine may have a high chlorine concentration in some areas, and the reactivity of chlorine may be enhanced when warm water or hot water is used for hot water supply, resin materials are degraded in chemical, physical or mechanical properties, as specifically evidenced by the appearance of bubbles and layer exfoliation and the like on the inside of pipes made of resin materials, such as water service pipe and water/hot water supply pipe and the like. In addition, there occur changes in the color developed by the coloring agent, pigment and dye added concurrently with resin materials, as well as various adverse effects caused by substances produced as a result of the reaction of chlorine with other inorganic additives, such as antioxidants, ultraviolet absorbers, hindered amine photostabilizers, carbon black and the like. With regard to the resin materials of water service pipes, water/hot water supply pipes and the like, moreover, degradation and the like of resin materials due to catalytic action of heavy metal or ion derived from metal pipes, joints and devices used in the system and the like are inevitable, and particularly, the adverse effects caused by active substances produced by the interaction with chlorine are also problematic.

With the aim of imparting, to resin materials, long-term resistance to water and hot water containing chlorine, it is proposed, for example, to add a large amount of an antioxidant to resin materials as described in Proc. Int. Gas Res. Conf., Vol. 3, p. 67-75 (1998), to utilize physical properties provided by forming a multi-layer resin structure of a tubular material as described in JP-A-9-170684 and JP-A-9-178058, to add an inorganic filler as described in JP-B-59-23575 and JP-B-63-42157, to add a titanium dioxide treated with zirconia as described in JP-A-10-265620, to add a modified polyethylene wax as described in JP-A-10-265620, to add an inorganic filler as described in JP-A-11-343368, and to add surface-treated hydrotalcite as described in JP-A-2000-198979. Furthermore, as described in JP-A-5-223187 and JP-A-2001-108160, enhancement of the properties of resin materials *per se* using polymerization technique of polymers has been suggested.

Thus, the present inventors studied the mechanism of degradation of an antioxidant effect and resin materials used in the environment where water or hot water is present, and conceived that the service life of resin materials is short because antioxidants easily undergo chemical changes within the resin materials due to water and hot water, and acquire a chemical structure that prevents exertion of an antioxidant effect, based on which they found the compounds described in JP-A-8-225495, JP-A-10-007917 and JP-A-11-181187. In other words, they considered that, if the substance generated by chemical changes (decomposition) of an antioxidant due to water and hot water can also exhibit an antioxidant effect, the antioxidant effect can be maintained for a long time, and as a result, they found that the resistance to water and hot water could be improved, but only to a technically insufficient level as yet.

### SUMMARY OF THE INVENTION

In view of the above situation, the present invention aims at providing a resin composition superior in chlorine water resistance and capable of affording a formed article, which article shows less decrease in mechanical strength and less degradation such as coloring of resins, shows less changes in the shape, such as decrease in thickness etc. over a long period of time, and which can maintain superior mechanical strength and stable color, even in the use in the environment where chlorine is present, particularly in the environment where water or hot water containing chlorine is present.

Another object of the present invention is to provide a method for inhibiting degradation of resin materials caused by chlorine, as mentioned above.

In an attempt to solve the above-mentioned problems, the present inventors have conducted various studies and found that, by adding the compound of the formula (I) to a resin, changes in shape, such as a decrease in the thickness and the like, decrease in the mechanical strength and degradation of resin materials, such as coloring and the like, observed when the resin material is used in the environment where chlorine is present, particularly in the environment where water containing chlorine (hereinafter to be also referred to as chlorine water) is present, can be inhibited for a long time, which resulted in the completion of the present invention.

The present inventors have also found that, by the addition to a resin of the compound of the formula (I) and compounds (iii), (iv) (v) according to claim 3, particularly a specific phosphorus antioxidant (at least one kind selected from Group B below), particularly a specific phenolic antioxidant (at least one kind selected from Group C' below), particularly a specific phenolic antioxidant (at least one kind selected from Group C" below), particularly a specific heavy metal deactivator (at least one kind selected from Group D below), leads to more effective suppression of the degradation of resin materials due to chlorine water.

Particularly, the present inventors have found that the addition of a compound of the formula (I), a specific phosphorus antioxidant (at least one kind selected from Group B below) and a specific phenolic antioxidant (at least one kind selected from Group C' below and/or at least one kind selected from Group C" below) and a specific heavy metal deactivator (at least one kind selected from Group D below) to a resin leads to the long-term suppression of changes in shape such as decreased thickness and the like, decreased mechanical strength and degradation of resin materials, such as coloring and the like, particularly decrease in the thickness of pipes, when the resin material is used in the environment where chlorine water is present.

Generally, when the amount of additives, such as antioxidant and the like, to be used for a resin increases, bleeding out occurs. However, the chlorine water-resistant resin composition of the present invention, which contains a compound of the formula (I), does not easily show such bleeding out, as compared to resin compositions containing other phenolic antioxidants.

Accordingly, the present invention relates to the subject matter of claims 1-20.

### DETAILED DESCRIPTION OF THE INVENTION

The present invention is explained in detail in the following.

In the aforementioned formula (I), the three groups represented by X may be the same or different. Preferably, the three groups represented by X are the same. In the aforementioned formula (II), R1 and R4 are the same or different and each is alkyl having 1 to 8 carbon atoms. Examples of alkyl include linear, branched chain or cyclic alkyl such as methyl, ethyl, n-propyl, isopropyl, n-butyl, isobutyl, sec-butyl, tert-butyl, n-pentyl, isopentyl, sec-pentyl, tert-pentyl, 2-methylbutyl, n-hexyl, isohexyl, sec-hexyl, tert-hexyl, cyclohexyl, heptyl, n-octyl, isooctyl, sec-octyl, tert-octyl, 2-ethylhexyl and the like. Of these, preferred is alkyl having 1 to 5 carbon atoms, particularly preferably tert-butyl.

In the aforementioned formula (II), R2, R3, R5 and R6 are the same or different and each is hydrogen atom or alkyl having 1 to 8 carbon atoms. Examples of alkyl include linear, branched chain or cyclic alkyl, such as methyl, ethyl, n-propyl, isopropyl, n-butyl, isobutyl, sec-butyl, tert-butyl, n-pentyl, isopentyl, sec-pentyl, tert-pentyl, 2-methylbutyl, n-hexyl, isohexyl, sec-hexyl, tert-hexyl, cyclohexyl, heptyl, n-octyl, isooctyl, sec-octyl, tert-octyl, 2-ethylhexyl and the like. Of these, preferred is alkyl having 1 to 5 carbon atoms. Of these, R2 and R3 are particularly preferably hydrogen atom or methyl, R5 is particularly preferably hydrogen atom, and R6 is particularly preferably tert-butyl.

Examples of the compound of the formula (I) include Group A:
1,1,3-tris(2-methyl-4-(3-(3,5-di-tert-butyl-4-hydroxyphenyl)propionyloxy)-5-tert-butylphenyl)butane,
1,1,3-tris(3-methyl-4-(3-(3,5-di-tert-butyl-4-hydroxyphenyl)propionyloxy)-5-tert-butylphenyl)butane,
1,1,3-tris(3-methyl-4-(3-(3-methyl-5-tert-butyl-4-hydroxyphenyl)propionyloxy)-5-tert-butylphenyl)butane,
1,1,3-tris(2-methyl-4-(3-(3-methyl-5-tert-butyl-4-hydroxyphenyl) propionyloxy) -5-tert-butylphenyl) butane and the like. These may be used alone or as a mixture of two or more kinds thereof.

The compound of the formula (I) can be produced according to a known method, such as the method described in JP-A-8-225495 (US 5,883,286). For example, 1,1,3-tris(2-methyl-4-hydroxy-5-tert-butylphenyl)butane, 1,1,3-tris(3-methyl-4-hydroxy-5-tert-butylphenyl)butane or the like is chemically reacted with 3,5-di-tert-butyl-4-hydroxyphenyl propionate or 3-methyl-5-tert-butyl-4-hydroxyphenyl propionate or the corresponding propionyl chloride or the like. In addition, by purifying a crude reaction product thereof by, for example, a method such as column chromatography, recrystallization and the like, a compound having a high purity can be obtained.

As a method for obtaining a compound of the formula (I) from a solution of a crude product or purified product of the compound of the formula (I), there are mentioned a method comprising removing a solvent by distillation, followed by drying, and a method comprising filtration after recrystallization. The former method produces an amorphous compound (α crystals) and the latter method produces a crystalline compound (β crystals). In the present invention, both α crystals and β crystals can be used. In addition, a mixture thereof and a crude reaction product can be also used. The crude reaction product contains a certain proportion of a synthetic starting material and a by-produced compound.

In the present invention, the resin to be contained in the resin material, a chlorine water-resistant resin composition or a formed article made of a resin is exemplified by thermoplastic resins and thermosetting resins. In the present invention, the "resin material" embraces a resin-containing composition including a resin itself or a resin and various additives.

As the thermoplastic resin, for example, styrene resin, polyolefin resin, vinyl chloride resin, polyamide resin, polyester resin, methacrylate resin, polycarbonate resin, polyacetal resin, polyethylene oxide resin, polyphenylene ether resin, polysulfone resin, polyurethane resin and the like are mentioned.

Examples of the above-mentioned styrene resin include polystyrene, high-impact polystyrene, styrene-acrylonitrile copolymer resin, ABS resin, AES resin, ACS resin, AAS resin, SBS resin, and mixtures thereof and the like.

Examples of the above-mentioned polyolefin resin include poly-α-olefin resin (e.g., low density polyethylene, linear low density polyethylene, medium density polyethylene, high density polyethylene, polypropylene, ethylene-propylene random copolymer, ethylene-propylene block copolymer, polybutene-1, ethylene-butene-1 random copolymer, polymethylpentene-1 etc.), a copolymer resin of poly-α-olefin and vinyl monomer (e.g., maleic anhydride modified polypropylene etc.), and mixtures thereof.

Examples of the above-mentioned vinyl chloride resin include polyvinyl chloride, vinyl chloride-vinyl acetate copolymer, vinyl chloride-alkyl acrylate copolymer, vinyl chloride-vinylidene chloride copolymer and the like. Examples of the above-mentioned polyamides include nylon 4, nylon 6, nylon 4/6, nylon 6/6, nylon 6/10, nylon 7, nylon 8, nylon 12, and mixtures thereof. Examples of the above-mentioned polyesters include polyethylene terephthalate, polybutylene terephthalate and the like.

As the thermosetting resin, for example, unsaturated polyester resin, epoxy resin, melamine resin and the like are mentioned.

Of these resins, thermoplastic resins, preferably polyolefin resin, particularly preferably ethylene resin, propylene resin and butene resin are used.

The resin may be a crosslinkable polyolefin resin obtained by imparting crosslinking property to the above-mentioned polyolefin resin. To impart crosslinking property to polyolefin resin, (i) polyolefin resin is graft copolymerized with a vinylsilane compound, (ii) ethylene and vinylsilane compound are random-copolymerized, (iii) polyolefin resin is mixed with the copolymer of the above-mentioned (i) or (ii) or other method is employed. Examples of the vinylsilane compound include vinyltrimethoxysilane, γ-methacryloyloxytrimethoxysilane and the like. The production method of crosslinkable polyolefin resin is described in, for example, JP-B-48-1711, JP A-55-9611, JP-A-59-36115, and the like and this resin is commercially available.

For cross-linking of the above-mentioned polyolefin resin, a silanol condensation catalyst, such as dibutyltin dilaurate, dioctyltin dilaurate and the like, is used for a crosslinkable polyolefin resin, and water is added to easily start a crosslinking reaction to cause cross-linking. The silanol condensation catalyst is preferably added to a polyolefin resin to be a base material in a master batch, rather than directly adding the catalyst to a polyolefin resin. When a silanol condensation catalyst is directly added, uniform dispersion in the polyolefin resin is difficult to achieve and the cross-linking may unpreferably occur locally.

The amount of the compound of the formula (I) to be added relative to the resin is 0.01-10 parts by weight, preferably 0.1-1 part by weight, per 100 parts by weight of the resin. When the amount of the compound of the formula (I) is less than 0.01 part by weight, the inhibitory effect against degradation due to chlorine becomes lower, whereas when it exceeds 10 parts by weight, bleeding out and the like from the resin unpreferably occurs.

The chlorine water-resistant resin composition of the present invention may further contain, in addition to the compound of the formula (I), a phosphorus antioxidant.

The phosphorus antioxidant to be used in the present invention may be any as long as it is used as a phosphorus antioxidant for resin. For example, the compounds described in JP-B-56-5417, JP-B-56-32339, JP-A-52-106879, JP-B-50-35096, JP-A-5-178870 and the like are mentioned.

The phosphorus antioxidant is preferably selected from the following Group B.
Group B: tris(2,4-di-tert-butylphenyl) phosphite, tetrakis (2,4-di-tert-butylphenyl) -4,4 ' -biphenylenediphosphonite, tetrakis(2,4-di-tert-butyl-5-methylphenyl)-4,4'-biphenylenediphosphonite,
bis(2,4-di-tert-butylphenyl)pentaerythritol diphosphite, bis(2,6-di-tert-butyl-4-methylphenyl)pentaerythritol diphosphite,
2,2'-methylenebis(4,6-di-tert-butylphenyl)-2-ethylhexyl phosphite,
(2,4,6-tri-tert-butylphenyl)-2-butyl-2-ethyl-1,3-propanediol phosphite,
2,2',2"-nitrilo(triethyltris(3,3',5,5'-tetra-tert-butyl-1,1'-biphenyl-2,2'-diyl) phosphite),
distearylpentaerythritol diphosphite, and
hexatridecyl-1,1,3-tris(2-methyl-4-hydroxy-5-tert-butylphenyl)butane triphosphite, which may be used alone or in combination of two or more kinds thereof.

The compound selected from the above-mentioned Group B is generally used as a phosphorus antioxidant. In the chlorine water-resistant resin composition of the present invention, a phosphorus antioxidant is considered to suppress degradation of the resin during high temperature processing, as a result of which the compound of the formula (I) is not consumed during form-processing but considered to fully exhibit a suppressive effect on the degradation caused by chlorine. In other words, the chlorine water-resistant resin composition of the present invention can further afford superior chlorine water resistance by the combined use of the compound of the formula (I) with a phosphorus antioxidant. Of the compounds of the above-mentioned Group B, preferred are tris(2,4-di-tert-butylphenyl) phosphite, tetrakis(2,4-di-tert-butylphenyl)-4,4'-biphenylenediphosphonite, tetrakis(2,4-di-tert-butyl-5-methylphenyl)-4,4'-biphenylenediphosphonite, bis(2,4-di-tert-butylphenyl)pentaerythritol diphosphite and bis(2,6-di-tert-butyl-4-methylphenyl)pentaerythritol diphosphite. Of these, tris(2,4-di-tert-butylphenyl) phosphite is particularly preferable.

The chlorine water-resistant resin composition of the present invention may further contain a phenolic antioxidant in addition to the compound of the formula (I).

In the present specification, by the phenolic antioxidant is meant a phenolic antioxidant other than the compound of the formula (I). The phenolic antioxidant to be used in the present invention may be any as long as it is generally used as a phenolic antioxidant for resins. For example, the compounds described in JP-B-38-17164, JP-B-39-4620, JP-B-42-9651 and the like are mentioned.

Preferably, the phenolic antioxidant is selected from the following Group C.
Group C: vitamin E,
2,6-di-tert-butyl-4-methylphenol,
2,4-dimethyl-6-tert-butylphenol,
2,6-di-tert-butyl-4-ethylphenol,
2,4,6-tri-tert-butylphenol,
2,6-di-tert-butyl-4-hydroxymethylphenol,
2,2'-methylenebis(4-methyl-6-tert-butylphenol),
2,2'-methylenebis(4-ethyl-6-tert-butylphenol),
2,2'-butylidenebis(4-methyl-6-tert-butylphenol),
4,4'-methylenebis(2,6-di-tert-butylphenol).
4,4'-butylidenebis(3-methyl-6-tert-butylphenol),
2,2'-thiobis(4 methyl-6-tert-butylphenol),
4,4'-thiobis(3-methyl-6-tert-butylphenol),
1,1,3-tris(2-methyl-4-hydroxy-5-tert-butylphenyl)butane,
1,3,5-trimethyl-2,4,6-tris(3,5-di-tert-bntyl-4-hydroxybenzyl)-benzene,
1,3,5-tris(3,5-di-tert-butyl-4-hydroxybenzyl) isocyanurate,
1,3,5-tris(4-tert-butyl-3-hydroxy-2,6-dimethylbenzyl) isocyanurate,
3,9-bis(2-(3-(3-tert-butyl-4-hydroxy-5-methylphenyl)-propionyloxy)-1,1-dimethylethyl)-2,4,8,10-tetraoxaspiro[5.5]undecane,
2-tert-butyl-6-(3-tert-butyl-5-methyl-2-hydroxybenzyl)-4-methylphenyl acrylate,
ethylene glycol bis(3,3-bis(3-tert-butyl-4-hydroxyphenyl)butyrate),
n-octadecyl-β-(3,5-di-tert-butyl-4-hydroxyphenyl)propionate, and
pentaerythrityl tetrakis(3-(3,5-di-tert-butyl-4-hydroxyphenyl)-propionate).

These may be used alone or in combination of two or more kinds thereof.

Of these, a phenolic antioxidant that acts as a stabilizer during processing is selected from the following Group C'.
Group C': vitamin E and
2,6-di-tert-butyl-4-methylphenol.

The phenolic antioxidant that can inhibit changes in the shape, particularly a decrease in the thickness and the like, along with the compound of the formula (I) is selected from the following Group C".
Group C": 1,3,5-trimethyl-2,4,6-tris(3,5-di-tert-butyl-4-hydroxybenzyl)benzene,
pentaerythrityl tetrakis(3-(3,5-di-tert-butyl-4-hydroxyphenyl)propionate),
1,3,5-tris(3,5-di-tert-butyl-4-hydroxybenzyl) isocyanurate,
1,3,5-tris(4-tert-butyl-3-hydroxy-2,6-dimethylbenzyl) isocyanurate,
1,1,3-tris (2-methyl-4-hydroxy-5-tert-butylphenyl)butane, and ethylene glycol bis(3,3-bis(3-tert-butyl-4-hydroxyphenyl)butyrate).

The amount of the phosphorus antioxidant to be added relative to the resin is 0.01-10 parts by weight, preferably 0.1-5 parts by weight, particularly preferably 0.1-1 part by weight, per 100 parts by weight of the resin. When the amount of the phosphorus antioxidant is less than 0.01 part by weight, the inhibitory effect against degradation caused by chlorine becomes lower, whereas when it exceeds 10 parts by weight, bleeding out and the like from the resin unpreferably occurs.

The amount of the phenolic antioxidant to be added relative to the resin is 0.01-10 parts by weight, preferably 0.1-5 parts by weight, particularly preferably 0.1-1 part by weight, per 100 parts by weight of the resin. When the amount of the phenolic antioxidant is less than 0.01 part by weight, the inhibitory effect against degradation caused by chlorine becomes lower, whereas when it exceeds 10 parts by weight, bleeding out and the like from the resin unpreferably occurs.

When the phosphorus antioxidant and the phenolic antioxidant are added, the total amount of the phosphorus antioxidant and the phenolic antioxidant to be added relative to the resin is 0.01-10 parts by weight, preferably 0.1-5 parts by weight, particularly preferably 0.1-1 part by weight, per 100 parts by weight of the resin. When the total amount of the phosphorus antioxidant and the phenolic antioxidant is less than 0.01 part by weight, the inhibitory effect against degradation caused by chlorine becomes lower, whereas when it exceeds 10 parts by weight, bleeding out and the like from the resin unpreferably occurs.

The compound of the formula (I) and the phosphorus antioxidant are preferably used at a weight ratio of 1:0.1 - 1:3. The weight ratio of the compound of the formula (I) and the phenolic antioxidant is 1.0.1 - 1:10, preferably 1:0.1 - 1:5.

When the phosphorus antioxidant and the phenolic antioxidant are added, the weight ratio of the compound of the formula (I) and the total amount of the phosphorus antioxidant and the phenolic antioxidant to be added is 1:0.1 - 1:10, preferably 1:0.1 - 1:5.

The chlorine water-resistant resin composition of the present invention may further contain, in addition to the compound of the formula (I), a heavy metal deactivator.

In the present invention, by the heavy metal deactivator is meant a chelating agent that inactivates or decreases the capability of the heavy metal ion to start degrading a resin or to act as a catalyst. The heavy metal deactivator reacts with a heavy metal ion, such as copper ion and the like, present in the resin composition to form a chelate compound and prevents oxidation of the resin. The heavy metal deactivator includes a compound referred to as a "metal deactivator" or a "copper inhibitor" that is used as an additive to be mixed with a resin. The heavy metal deactivator is exemplified by 2,4,6-triaminotriazine,
ethylenediaminetetraacetic acid and metal salts thereof, benzotriazole,
N,N'-bis(3-(3,5-di-tert-butyl-4-hydroxyphenyl)-propionyl)hydrazine,
decanedicarboxylic acid disalicyloylhydrazide,
3-(N-salicyloyl)amino-1,2,4-triazole,
N,N'-bis(2-(3-(3,5-di-tert-butyl-4-hydroxyphenyl)propionyloxy)-ethyl)oxamide,
tris(2-tert-butyl-4-(3-tert-butyl-4-hydroxy-6-methylphenylthio)-5-methylphenyl) phosphite, oxalic acid bisbenzylidenehydrazide,
isophthalic acid bis(2-phenoxypropionylhydrazide),
3,9-bis(2-(3,5-diamino-2,4,6-triazaphenyl)ethyl)-2,4,8,10-tetraoxaspiro[5.5]undecane and the like.

When, of these, 2,4,6-triaminotriazine, ethylenediaminetetraacetic acid and metal salts thereof, and the like are used as a heavy metal deactivator of the present invention, a certain effect is provided, but sufficient resistance is hardly achieved, because they have low solubility in the resin, which is a hydrocarbon compound, and the like. Therefore, those shown in the following Group D are preferable as the heavy metal deactivator of the present invention.
Group D: N,N'-bis(3-(3,5-di-tert-butyl-4-hydroxyphenyl)-propionyl)hydrazine,
N,N'-bis(2-(3-(3,5-di-tert-butyl-4-hydraxyphenyl)propionyloxy)-ethyl)oxamide,
tris(2-tert-butyl-4-(3-tert-butyl-4-hydroxy-6-methylphenylthio)-5-methylphenyl) phosphite,
decanedicarboxylic acid disalicyloylhydrazide, and 3-(N-salicyloyl)amino-1,2,4-triazole.

Of these, N,N'-bis(3-(3,5-di-tert-butyl-4-hydroxyphenyl)propionyl)hydrazine is particularly preferable.

The amount of the heavy metal deactivator to be added relative to the resin is 0.01-10 parts by weight, preferably 0.1-1 part by weight, per 100 parts by weight of the resin. When the amount of the compound of the formula (I) is less than 0.01 part by weight, the inhibitory effect against degradation becomes lower, whereas when it exceeds 10 parts by weight, the degradation inhibitory effect is not improved but degradation of the appearance due to bleeding out and the like from the resin surface unpreferably occurs.

The chlorine water-resistant resin composition of the present invention can contain various resin additives as long as the effect of the present invention is not impaired. The resin additives that can be mixed are, for example, sulfur antioxidant, photostabilizer, ultraviolet absorber, metal soap, epoxy compound, pigment, dye, fire retardant, antistatic agent, lubricant, processing synergist, nucleator, plasticizer, filler, blowing agent and the like.

When the chlorine water-resistant resin composition of the present invention is to be prepared, the compound of the formula (I), the additives such as phosphorus antioxidant, phenolic antioxidant and heavy metal deactivator, when they are to be added, and where necessary, various other resin additives, after weighing the predetermined weights thereof, are admixed with the resin. For mixing, a mixer conventionally used for mixing additives with a resin, such as a ball mill, a pebble mill, a change-can mixer, a supermixer (Henschel mixer) and the like can be used. For admixing, a kneader conventionally used for kneading additives with a resin, such as a mixing roll, a Banbury mixer, a Σ blade mixer, a high-speed biaxial continuous mixer, uniaxial extruder type kneader, biaxial extruder type kneader and the like can be used. When the compound of the formula (I), a phosphorus antioxidant, a phenolic antioxidant or a heavy metal deactivator are to be mixed, a thermoplastic resin containing these additives is melt-kneaded generally at the temperature higher than a melting point of the resin.

The chlorine water-resistant resin composition of the present invention can be formed into a desired product by various molding methods conventionally known for resin, such as an injection molding method, an extrusion molding method, a calender molding method, a blow molding method, a compression molding method and the like. The shape and use of the product are free of any particular limitation, and the product may be used outdoor or indoor, which is specifically exemplified by parts of electric appliances, parts of electronic products, parts of agricultural machinery, product for agricultural use, parts of fishery machines, products for fishery use, parts of automobile vehicles, daily needs, sundries, and the like. More specifically, it can be used for a coating layer of a steel pipe for heavy oil for high temperature transport, a thermal pipe for hot water supply, underfloor heating and the like, parts of home appliances such as jar, electric pot and washing machine and the like, and the like. As a formed article made of a resin for which the degradation inhibiting method of the present invention is applied, the products exemplified by the above-mentioned are mentioned.

### Examples

The present invention is explained in more detail in the following by referring to Examples and Comparative Examples, which are not to be construed as limitative.

### <chlorine water resistance test>

### Examples 1-13 and Comparative Examples 1-6

A master batch containing high density polyethylene, dioctyltin dilaurate (1 wt%) and each additive compound described in Table 1 was prepared.

Silane crosslinkable polyethylene (95 parts by weight, manufactured by Mitsubishi Chemical Corporation, trademark LINKLON XHE740) was mixed with the master batch (5 parts by weight) obtained by the above-mentioned method. The mixture was melt-kneaded in an extruder having a pipe-forming die at the tip and formed to give a pipe having a diameter of 12 mm and a thickness of 2 mm. Thereafter, hot water at 90°C was passed through the pipe for 16 hours for a cross-linking treatment.

The appearance (presence or absence of bleeding out) of the cross-linked polyethylene pipe thus obtained was observed 10 days after the cross-linking treatment, the results of which are shown in Table 1.

The chlorine water resistance test of the cross-linked polyethylene pipe was conducted according to the following method. Sodium hypochlorite as a chlorine generating agent was added to deionized water to a chlorine concentration of 3±0.1 ppm to prepare chlorine water. Chlorine water having a temperature of 115±1°C, pH 6.5±0.2 was circulated through a cross-linked polyethylene pipe (length 30 cm) equipped with a titanic connecting fittings at a flow rate of 0.3 m/sec at an inner pressure of 1.0 MPa, and the degradation of the pipe was observed. The chlorine water was exchanged by 10% of the total amount every day and adjusted to meet the above-mentioned conditions. The time before occurrence of crack in the pipe was taken as the chlorine water contact degradation time (hour), and the wall thickness of the pipe at the time the crack occurred was measured and compared with the wall thickness of 2 mm immediately after preparation of the pipe, based on which the decrease in thickness (%) was calculated. The results are shown in Table 1.

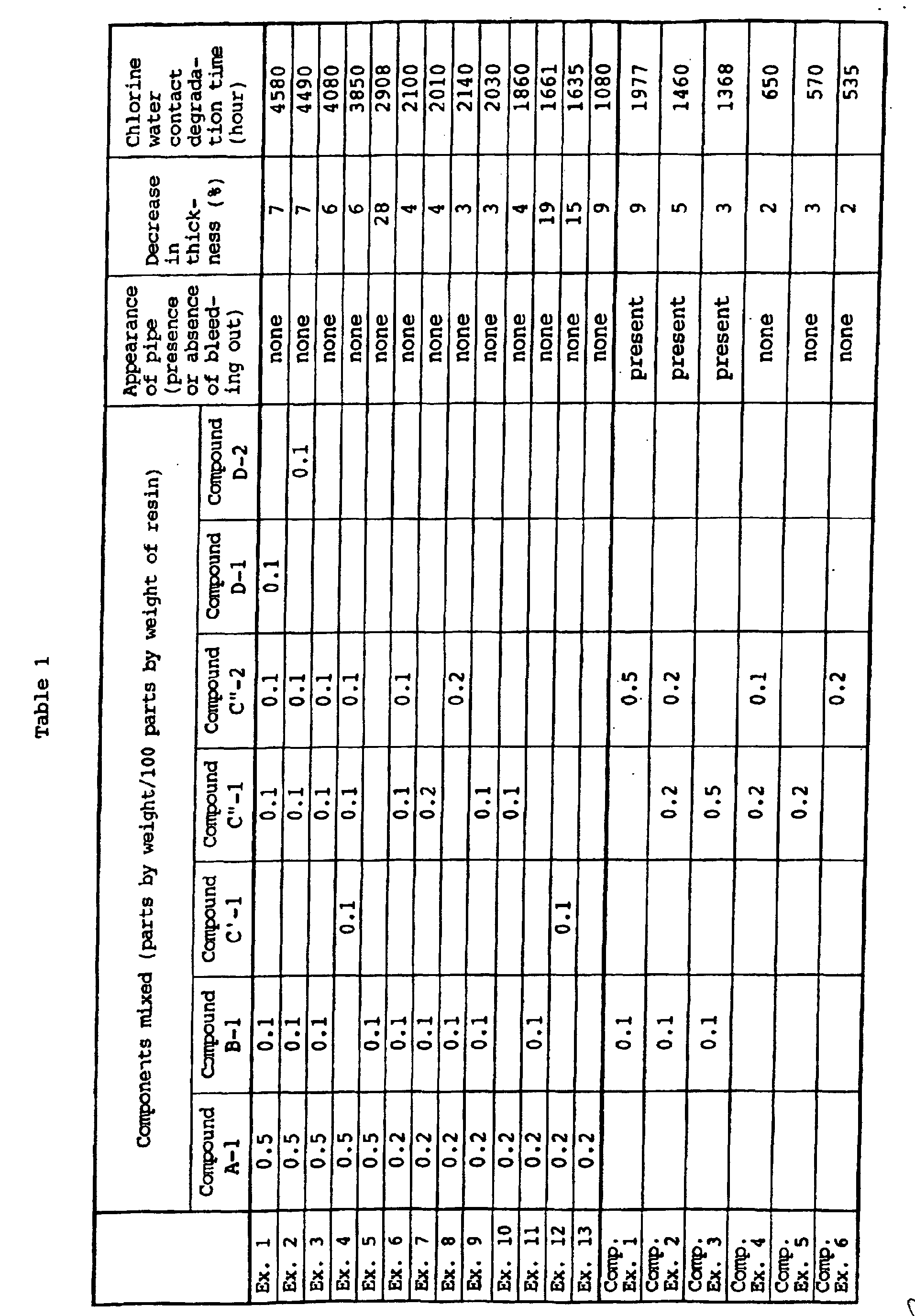

The abbreviations of the additive compounds in Table 1 are as follows.
A-1: 1,1,3-tris(2-methyl-4-(3-(3,5-di-tert-butyl-4-hydroxyphenyl)propionyloxy)-5-tert-butylphenyl)butane (synthesized according to the method described in JP-A-8-225495)
B-1: tris(2,4-di-tert-butylphenyl) phosphite (manufactured by Yoshitomi Fine Chemicals, Ltd., trademark TOMIPHOS 202)
C'-1: 2,6-di-tert-butyl-4-methylphenol (manufactured by Yoshitomi Fine Chemicals, Ltd., trademark YOSHINOX BHT)
C"-1: 1,3,5-trimethyl-2,4,6-tris(3,5-di-tert-butyl-4-hydroxybenzyl)benzene (manufactured by Ciba Specialty Chemicals, trademark IRGANOX 1330)
C"-2: pentaerythrityl tetrakis(3-(3,5-di-tert-butyl-4-hydroxyphenyl)propionate) (manufactured by Yoshitomi Fine Chemicals, Ltd., trademark TOMINOX TT)
D-1: N,N'-bis(3-(3,5-di-tert-butyl-4-hydroxyphenyl)propionyl)hydrazine (manufactured by Ciba Specialty Chemicals, trademark IRGANOX MD1024)
D-2: decanedicarboxylic acid disalicyloylhydrazide (manufactured by ASAHI DENKA KOGYO K.K., trademark Adekastab CDA-6)

The chlorine water-resistant resin composition of the present invention of Example 5 containing Compound A-1 showed about twice the chlorine water resistance (chlorine water contact degradation time) of the resin compositions of Comparative Example 3 and Comparative Example 1 containing the same concentration of phenolic antioxidant C"-1 and C"-2, respectively. Even if the concentration of Compound A-1 was reduced to 0.2 part by weight (Example 11), the same chlorine water resistance as in Comparative Example 1 and Comparative Example 3 was found.

In Comparative Example 1 and Comparative Example 3, bleeding out of the additive compound on the surface of the formed article was observed. Therefore, an increase in the concentration of the additive would only increase the amount of bleeding out, rather than enhancing chlorine water resistance. In contrast, the chlorine water-resistant resin compositions of Example 5 and Example 11 of the present invention were free of bleeding out. Therefore, the compound of the formula (I) had a high solubility in resin and an increased concentration of the additive was expected to enhance the chlorine water resistance.

The chlorine water-resistant resin composition of Example 13 of the present invention, which contained Compound A-1, showed about twice the chlorine water resistance of the resin compositions of Comparative Example 5 and Comparative Example 6 containing the same concentration of phenolic antioxidant C"-1 and C"-2, respectively.

The chlorine water-resistant resin compositions of Example 11 and Example 12 of the present invention, which contained phosphorus antioxidant B-1 and phenolic antioxidant C'-1, respectively, along with Compound A-1, showed about 1.6 times the chlorine water resistance of Example 13 because stability during processing was achieved.

In Example 10, the chlorine water-resistant resin composition of the present invention containing phenolic antioxidant C"-1 along with Compound A-1 showed about 1.7 times the chlorine water resistance of Example 13.

The chlorine water-resistant resin compositions of Examples 3, 4 and 6-9 of the present invention containing phosphorus antioxidant B-1 or phenolic antioxidant C'-1 and further phenolic antioxidant C"-1 or C"-2, along with Compound A-1, showed a smaller decrease in thickness and greater chlorine water resistance as compared to those of Example 11, Example 5 and Example 12 without the phenolic antioxidant C"-1 or C"-2.

particularly, when Example 11 and Example 9, and Example 5 and Example 3 are compared, the addition of Compound C"-1 or C"-2 resulted in the decrease in the thickness to ¼ - 1/6 and in the increase (1.2 - 1.5 times increase) in the chlorine water resistance.

The chlorine water-resistant resin composition of Example 1 and Example 2 of the present invention, which contained, along with Compound A-1, a phosphorus antioxidant B-1 and phenolic antioxidants C"-1 and C"-2, and further a heavy metal deactivator D-1 or D-2, showed a smaller decrease in the thickness and greater chlorine water resistance than the composition of Example 3 without a heavy metal deactivator.

From the above results, it is clear that a combined use of the compound of the formula (I) with a specific phenolic antioxidant, such as C"-1 and C"-2, affords improvement in the chlorine water resistance and suppression of the changes in the shape, such as decrease in thickness and the like. Moreover, by a combined use with a heavy metal deactivator, such as D-1 and D-2, further improvement in the chlorine water resistance can be achieved.

Furthermore, it has been found that a combined use of the compound of the formula (I) with a specific phosphorus antioxidant such as B-1 and/or a specific phenolic antioxidant such as C'-1, and a specific phenolic antioxidant such as C"-1 or C"-2 and further a heavy metal deactivator such as D-1 or D-2 affords improvement in the chlorine water resistance and suppression of the changes in the shape, such as decrease in thickness and the like.

According to the present invention, by adding the compound of the formula (I) to a resin, a chlorine water-resistant resin composition can be provided, which affords a formed article having superior chlorine water resistance, a smaller decrease in the mechanical strength, smaller changes in the shape, such as decrease in thickness and the like, and difficulty in coloring, even when used in the environment where chlorine is present, particularly in the environment where water or hot water containing chlorine is present, for a long time.

In addition, by adding a compound of the formula (I) and a phosphorus antioxidant, particularly a specific phosphorus antioxidant (at least one kind selected from Group B), to a resin, a chlorine water-resistant resin composition can be provided, which affords a formed article having more superior chlorine water resistance.

Moreover, by adding a compound of the formula (I) and a phenolic antioxidant, particularly a specific phenolic antioxidant (at least one kind selected from Group C'), to a resin, a chlorine water-resistant resin composition can be provided, which affords a formed article having more superior chlorine water resistance.

When a compound of the formula (I) and a phenolic antioxidant, particularly a specific phenolic antioxidant (at least one kind selected from Group C"), are added to a resin, a chlorine water-resistant resin composition can be provided, which affords a formed article having more superior chlorine water resistance and showing a suppressed decrease in the thickness of pipes.

Furthermore, by adding a compound of the formula (I) and a heavy metal deactivator, particularly a specific heavy metal deactivator (at least one kind selected from Group D), to a resin, a chlorine water-resistant resin composition can be provided, which affords a formed article having more superior chlorine water resistance and showing a suppressed decrease in thickness of pipes.

Particularly, when a compound of the formula (I), a specific phosphorus antioxidant (at least one kind selected from Group B) and/or a specific phenolic antioxidant (at least one kind selected from Group C'), a specific phenolic antioxidant (at least one kind selected from Group C") and a specific heavy metal deactivator (at least one kind selected from Group D) are added to a resin, a chlorine water-resistant resin composition affording a formed article having a superior chlorine water resistance is provided, which article shows less decrease in mechanical strength, less changes in the shape, such as decreased thickness etc., and difficulty in coloring, even in the use in the environment where chlorine water is present, over a long period of time.

## Claims

1. Use of a compound of the formula (I) 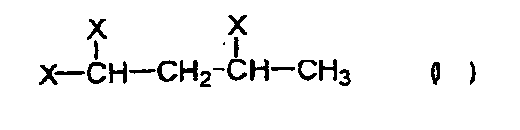
wherein X is a group of the formula (II) 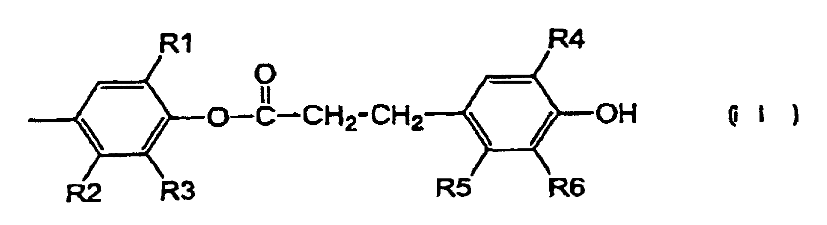
wherein R1 and R4 are the same or different and each is alkyl having 1 to 8 carbon atoms, R2, R3, R5 and R6 are the same or different and each is hydrogen atom or alkyl having 1 to 8 carbon atoms for Inhibiting degradation of resin materials by chlorine, wherein the resin materials are selected from thermoplastic resins and thermosetting resins.

2. Use of claim 1, wherein the compound of the formula (I) is at least one member selected from
1,1,3-tris(2-methyl-4-(3-(3,5-di-tert-butyl-4-hydroxyphenyl) propionyloxy)-5-tert-butylphenyl)butane,
1,1,3-tris(3-methyl-4-(3-(3,5-di-tert-butyl-4-hydroxyphenyl) propionyloxy)-5-tert-butylphenyl)butane,
1,1,3-tris(3-methyl-4-(3-(3-methyl-5-tert-butyl-4-hydroxyphenyl) propionyloxy)-5-tert-butylphenyl)butane, and
1,1,3-tris(2-methyl-4-(3-(3-methyl-5-tert-butyl-4-hydroxyphenyl) propionyloxy)-5-tert-butylphenyl)butane.

3. A chlorine water-resistant resin composition,'which comprises
(i) a resin selected from thermoplastic resins and thermosetting resins;
(ii) a compound of the formula (I), 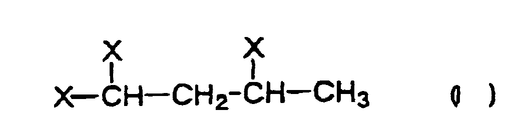
wherein X is a group of the formula (II) 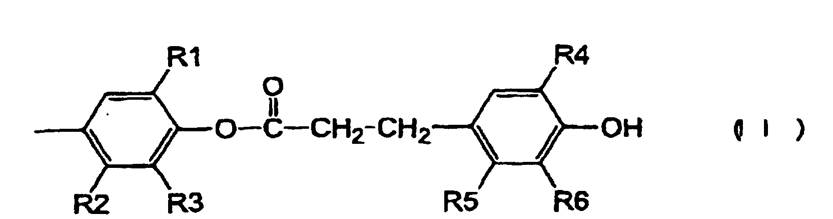
wherein R1 and R4 are the same or different and each is alkyl having 1 to 8 carbon atoms, R2, R3, R5 and R6 are the same or different and each is hydrogen atom or alkyl having 1 to 8 carbon atoms,
(iii) a phosphorus antioxidant,
(iv) a phenolic antioxidant other than the compound of formula (I), and
(v) a heavy metal deactivator,
wherein the amount of the compound of formula (I) is 0.01 to 10 parts by weight per 100 parts by weight of resin.

4. The composition of claim 3, wherein the compound of the formula (I) is at least one member selected from the following Group A
Group A;
1,1,3-tris(2-methyl-4-(3-(3,5-di-tert-butyl-4-hydroxyphenyl) propionyloxy)-5-tert-butylphenyl)butane,
1,1,3-tris(3-methyl-4-(3-(3,5-di-tert-butyl-4-hydroxyphenyl) propionyloxy)-5-tert-butylphenyl)butane,
1,1,3-tris(3-methyl-4-(3-(3-methyl-5-tert-butyl-4-hydroxyphenyl) proplonyloxy)-5-tert-butylphenyl) butane, and
1,1,3-tris(2-methyl-4-(3-(3-methyl-5-tert-butyl-4-hydroxyphenyl) propionyloxy)-5-tert-butylphenyl)butane;
the phosphorus antioxidant is at least one member selected from the following Group B
Group B:
tris(2,4-di-tert-butylphenyl) phosphite,
tetrakis(2,4-di-tert-butylphenyl)-4,4'-biphenylenediphosphonite,
tetrakis(2,4-di-tert-butyl-5-methylphenyl)-4,4'-biphenylenediphosphonite,
bis(2,4-di-tert-butylphenyl)pentaerythritol diphosphite,
bis(2,6-di-tert-butyl-4-methylohenyl)pentaerythritol diphosphite,
2,2'-methylenebis(4,6-di-tert-butylphenyl)-2-ethylhexyl phosphite,
(2,4,6-tri-tert-butylphenyl)-2-butyl-2-ethyl-1,3-propanediol phosphite,
2,2',2"-nitrilo(triethyltris(3,3',5,5'-tetra-tert-butyl-1,1'-biphenyl-2,2'-diyl) phosphite),
distearylpentaerythritol diphosphite, and
hexatridecyl-1,1,3-tris(2-methyl-4-hydroxy-5-tert-butylphenyl)butane triphosphite;
the phenolic antioxidant other than the compound of formula (I) is at least one member selected from the following Group C' and Group C"
Group C':
vitamin E and
2,6-di-tert-butyl-4-methylphenol,
Group C";
1,3,5-trimethyl-2,4, 6-tris(3, 5-di-tert-butyl-4-hydroxybenzyl) benzene, pentaerythrityl tetrakis(3-(3,5-di-tert-butyl-4-hydroxyphenyl)propionate),
1,3,5-tris(3,5-di-tert-butyl-4-hydroxybenzyl) isocyanurate,
1,3,5-tris(4-tert-butyl-3- hydroxy-2,6 -dimethylbenzyl) isocyanurate,
1,1,3-tris(2-methyl-4-hydroxy-5-tert-butylphenyl)butane, and
ethylene glycol bis(3,3-bis(3-tert-butyl-4-hydroxyphenyl)butyrate); and
the heavy metal deactivator is at least one member selected from the following Group D
Group D:
N,N'-bis(3-(3,5-di-tert-butyl-4-hydroxyphenyl)propionyl)hydrazine,
N,N'-bis(2-(3-(3,5-di-tert-butyl-4-hydroxyphenyl)propionyloxy)-ethyl)oxamide,
tris(2-tert-butyl-4-(3-tert-butyl-4-hydroxy-6-methylphenylthio)-5-methylphenyl) phosphite,
decanedicarboxylic acid disalicyloylhydrazide, and
3-(N-selicyloyl) amino- 1,2,4-triazole.

5. The composition of claim 4, wherein the phenolic antioxidant other than the compound of formula (I) is at least one member selected from 1,3,5-trimethyl-2,4,6-tris(3,5-di-tert-butyl-4-hydroxybenzyl)benzene, pentaerythrityl tetrakis (3-(3,5-di-tert-butyl-4-hydroxyphenyl)propionate), and
ethylene glycol bis (3,3-bis(3-tert-butyl-4-hydroxyphenyl)butyrate).

6. The composition of claim 5, wherein the compound of the formula (I) is 1,1,3-tris(2-methyl-4-(3-(3,5-di-tert-butyl-4-hydroxyphenyl)propionyloxy)-5-tert-butylphenyl)butane; the phosphorus antioxidant is at least one member selected from tris(2,4-di-tert-butylphenyl) phosphite, and
tetrakis(2,4-di-tert-butylphenyl)-4,4'-biphenylenediphosphonite; and the heavy metal deactivator is at least one member selected from N,N'-bis(3-(3,5-di-tert-butyl-4-hydroxyphenyl)-propionyl)hydrazine, and
decanedicarboxylic acid disalicyloylhydrazide.

7. The composition of claim 6, wherein the phosphorus antioxidant is tris(2,4-di-tert-butylphenyl) phospite; and
the phenolic antioxidant other than the compound of formula (I) is at least one member selected from 1,3,5-trimethyl-2,4,6-tris(3,5-di-tert-butyl-4-hydroxybenzyl) benzene, and pentaerytrhrityl tetrakis(3-(3,5-di-tert-butyl-4-hydroxyphenyl)propionate).

8. The composition of any one of claims 3 to 7, wherein the resin is a polyolefin resin.

9. A method for inhibiting degradation of a resin material by chlorine, which comprises adding to the resin material an agent comprising a compound of formula (I) 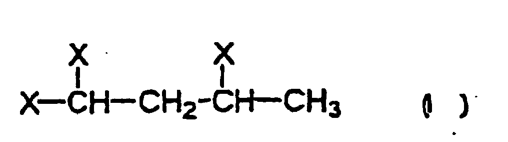
wherein X is a group of the formula (II) 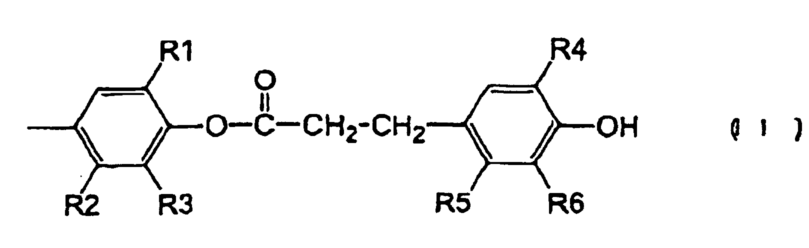
wherein R1 and R4 are the same or different and each is alkyl having 1 to 8 carbon atoms, R2, R3, R5 and R6 are the same or different and each is hydrogen atom or alkyl having 1 to 8 carbon atoms, wherein the resin material is selected from thermoplastic resins and thermosetting resins, and the amount of the compound of formula (I) is 0.01 to 10 parts by weight per 100 parts by weight of the resin.

10. The method for inhibiting degradation of a resin material caused by chlorine according to claim 9, further comprising adding a phosphorus antioxidant to the resin material.

11. The method for inhibiting degradation of a resin material caused by chlorine according to claim 9, further comprising adding a phenolic antioxidant other than the compound of formula (I) to the resin material.

12. The method for inhibiting degradation of a resin material caused by chlorine according to claim 9, further comprising adding a heavy metal deactivator to the resin material.

13. The method for inhibiting degradation of a resin material caused by chlorine according to claim 9, further comprising adding a phosphorus antioxidant, a phenolic antioxidant other than the compound of formula (I) and a heavy metal deactivator to the resin material.

14. The method according to any of claims 9 to 13, wherein the resin material comprises a polyolefin resin.

15. A method for inhibiting degradation of a formed resin article by chlorine, which comprises adding to the formed resin article an agent comprising a compound of the formula (I) 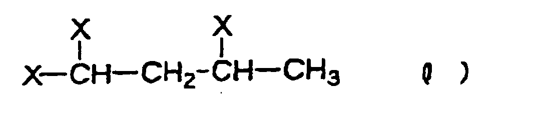
wherein X is a group of the formula (II) 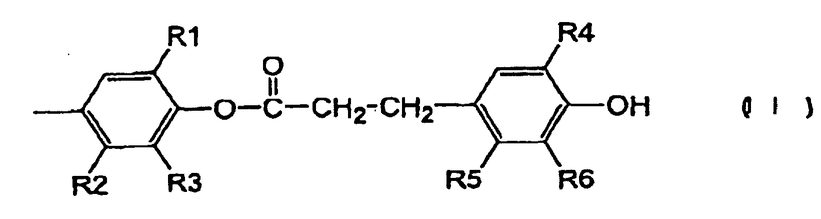
wherein R1 and R4 are the same or different and each is alkyl having 1 to 8 carbon atoms, R2, R3, R5 and R6 are the same or different and each is hydrogen atom or alkyl having 1 to 8 carbon atoms, wherein the resin material is selected from thermoplastic resins and thermosetting resins, and the amount of the compound of formula (I) is 0.01 to 10 parts by weight per 100 parts by weight of the resin.

16. The method for inhibiting degradation of a formed resin article caused by chlorine according to claim 15, further comprising adding a phosphorus antioxidant to the formed resin article.

17. The method for inhibiting degradation of a formed resin article caused by chlorine according to claim 15, further comprising adding a phenolic antioxidant other than the compound of formula (I) to the formed resin article.

18. The method for inhibiting degradation of a formed resin article caused by chlorine according to claim 15, further comprising adding a heavy metal deactivator to the formed resin article.

19. The method for inhibiting degradation of a formed resin article caused by chlorine according to claim 15, further comprising adding a phosphorus antioxidant, a phenolic antioxidant other than the compound of formula (I) and a heavy metal deactivator to the formed resin article.

20. The method according to any of claims 15 to 19, wherein the resin is a polyolefin resin.

## Patentansprüche

1. Verwendung einer Verbindung der Formel (I) 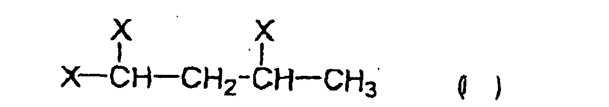 in der X eine Gruppe der Formel (II) 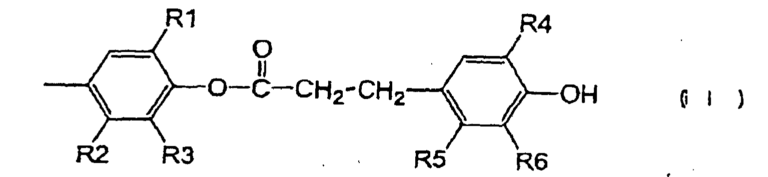 ist, in der R1 und R4 identisch oder verschieden sind und jeweils Alkyl mit 1 bis 8 Kohlenstoffatomen sind, R2, R3, R5 und R6 identisch oder verschieden sind und jeweils ein Wasserstoffatom oder Alkyl mit 1 bis 8 Kohlenstoffatomen sind, um den Abbau von Harzmaterialien durch Chlor zu hemmen, wobei die Harzmaterialien aus thermoplastischen Harzen und wärmehärtbaren Harzen ausgewählt sind.

2. Verwendung gemäß Anspruch 1, wobei die Verbindung der Formel (I) wenigstens ein Vertreter ist, der aus Folgendem ausgewählt ist:
1,1,3-Tris(2-methyl-4-(3-(3,5-di-tert-butyl-4-hydroxyphenyl)propionyloxy)-5-tert-butylphenyl)butan,
1,1,3-Tris(3-methyl-4-(3-(3,5-di-tert-butyl-4-hydroxyphenyl)propionyloxy)-5-tert-butylphenyl)butan,
1,1,3-Tris(3-methyl-4-(3-(3-methyl-5-tert-butyl-4-hydroxyphenyl)propionyloxy)-5-tert-butylphenyl)butan und
1,1,3-Tris(2-methyl-4-(3-(3-methyl-5-tert-butyl-4-hydroxyphenyl)propionyloxy)-5-tert-butylphenyl)butan.

3. Gegenüber Chlorwasser beständige Harz-Zusammensetzung, umfassend
(i) ein Harz, das aus thermoplastischen Harzen und wärmehärtbaren Harzen ausgewählt ist,
(ii) eine Verbindung der Formel (I) 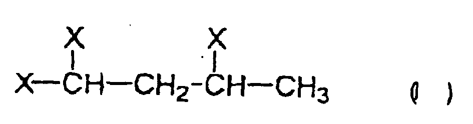 in der X eine Gruppe der Formel (II) 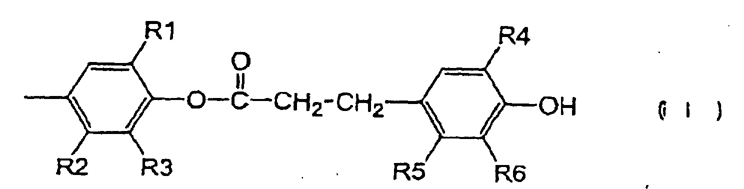 ist, in der R1 und R4 identisch oder verschieden sind und jeweils Alkyl mit 1 bis 8 Kohlenstoffatomen sind, R2, R3, R5 und R6 identisch oder verschieden sind und jeweils ein Wasserstoffatom oder Alkyl mit 1 bis 8 Kohlenstoffatomen sind,
(iii) ein Phosphor-Antioxidationsmittel,
(iv) ein phenolisches Antioxidationsmittel, das von der Verbindung der Formel (I) verschieden ist, und
(v) einen Schwermetall-Deaktivator,
wobei die Menge der Verbindung der Formel (I) 0,01 bis 10 Gewichtsteile pro 100 Gewichtsteile des Harzes ist.

4. Zusammensetzung gemäß Anspruch 3, wobei die Verbindung der Formel (I) wenigstens ein Vertreter ist, der aus der folgenden Gruppe A ausgewählt ist:
Gruppe A:
1,1,3-Tris(2-methyl-4-(3-(3,5-di-tert-butyl-4-hydroxyphenyl)propionyloxy)-5-tert-butylphenyl)butan,
1, 1,3-Tris(3-methyl-4-(3-(3,5-di-tert-butyl-4-hydroxyphenyl)propionyloxy)-5-tert-butylphenyl)butan,
1,1,3-Tris(3-methyl-4-(3-(3-methyl-5-tert-butyl-4-hydroxyphenyl)propionyloxy)-5-tert-butylphenyl)butan und
1,1,3-Tris(2-methyl-4-(3-(3-methyl-5-tert-butyl-4-hydroxyphenyl)propionyloxy)-5-tert-butylphenyl)butan;
das Phosphor-Antioxidationsmittel wenigstens ein Vertreter ist, der aus der folgenden Gruppe B ausgewählt ist:
Gruppe B:
Tris(2,4-di-tert-butylphenyl)phosphit,
Tetrakis(2,4-di-tert-butylphenyl)-4,4'-biphenylendiphosphonit,
Tetrakis(2,4-di-tert-butyl-5-methylphenyl)-4,4'-biphenylendiphosphonit,
Bis(2,4-di-tert-butylphenyl)pentaerythritdiphosphit,
Bis(2,6-di-tert-butyl-4-methylphenyl)pentaerythritdiphosphit,
2,2'-Methylenbis(4,6-di-tert-butylphenyl)-2-ethylhexylphosphit,
(2,4,6-Tri-tert-butylphenyl)-2-butyl-2-ethyl-1,3-propandiolphosphit,
2,2',2"-Nitrilo(triethyltris(3,3',5,5'-tetra-tert-butyl-1,1'-biphenyl-2,2'-diyl)phosphit),
Distearylpentaerythritdiphosphit und
Hexatridecyl-1,1,3-tris(2-methyl-4-hydroxy-5-tert-butylphenyl)butantriphosphit;
das phenolische Antioxidationsmittel, das von der Verbindung der Formel (I) verschieden ist, wenigstens ein Vertreter ist, der aus den folgenden Gruppen C' und C" ausgewählt ist:
Gruppe C':
Vitamin E und
2,6-Di-tert-butyl-4-methylphenol,
Gruppe C":
1,3,5-Trimethyl-2,4,6-tris(3,5-di-tert-butyl-4-hydroxybenzyl)benzol,
Pentaerythrityltetrakis(3-(3,5-di-tert-butyl-4-hydroxyphenyl)propionat),
1,3,5-Tris(3,5-di-tert-butyl-4-hydroxybenzyl)isocyanurat,
1,3,5-Tris(4-tert-butyl-3-hydroxy-2,6-dimethylbenzyl)isocyanurat,
1,1,3-Tris(2-methyl-4-hydroxy-5-tert-butylphenyl)butan und
Ethylenglycol-bis(3,3-bis(3-tert-butyl-4-hydroxyphenyl)butyrat), und
der Schwermetall-Deaktivator wenigstens ein Vertreter ist, der aus der folgenden Gruppe D ausgewählt ist:
Gruppe D:
N,N'-Bis(3-(3,5-di-tert-butyl-4-hydroxyphenyl)propionyl)hydrazin,
N,N'-Bis(2-(3-(3,5-di-tert-butyl-4-hydroxyphenyl)propionyloxy)ethyl)-oxamid,
Tris(2-tert-butyl-4-(3-tert-butyl-4-hydroxy-6-methylphenylthio)-5-methylphenyl)phosphit,
Decandicarbonsäuredisalicyloylhydrazid und
3-(N-Salicyloyl)amino-1,2,4-triazol.

5. Zusammensetzung gemäß Anspruch 4, wobei das phenolische Antioxidationsmittel, das von der Verbindung der Formel (I) verschieden ist, wenigstens ein Vertreter ist, der aus Folgendem ausgewählt ist:
1,3,5-Trimethyl-2,4,6-tris(3,5-di-tert-butyl-4-hydroxybenzyl)benzol,
Pentaerythrityltetrakis (3-(3,5-di-tert-butyl-4-hydroxyphenyl)propionat) und
Ethylenglycol-bis(3,3-bis(3-tert-butyl-4-hydroxyphenyl)butyrat).

6. Zusammensetzung gemäß Anspruch 5, wobei die Verbindung der Formel (I) 1,1,3-Tris(2-methyl-4-(3-(3,5-di-tert-butyl-4-hydroxyphenyl)propionyloxy-5-tert-butylphenyl)butan ist,
das Phosphor-Antioxidationsmittel wenigstens ein Vertreter ist, der aus Tris(2,4-di-tert-butylphenyl)phosphit und
Tetrakis(2,4-di-tert-butylphenyl)-4,4'-biphenylendiphosphonit ausgewählt ist, und
der Schwermetall-Deaktivator wenigstens ein Vertreter ist, der aus
N,N'-Bis(3-(3,5-di-tert-butyl-4-hydroxyphenyl)propionyl)hydrazin und
Decandicarbonsäuredisalicyloylhydrazid ausgewählt ist.

7. Zusammensetzung gemäß Anspruch 6, wobei das Phosphor-Antioxidationsmittel Tris(2,4-di-tert-butylphenyl)phospit ist und
das phenolische Antioxidationsmittel, das von der Verbindung der Formel (I) verschieden ist, wenigstens ein Vertreter ist, der aus 1,3,5-Trimethyl-2,4,6-tris(3,5-di-tert-butyl-4-hydroxybenzyl)benzol und Pentaerythrityltetrakis(3-(3,5-di-tert-butyl-4-hydroxyphenyl)propionat) ausgewählt ist.

8. Zusammensetzung gemäß einem der Ansprüche 3 bis 7, wobei das Harz ein Polyolefinharz ist.

9. Verfahren zur Hemmung des Abbaus eines Harzmaterials durch Chlor, umfassend die Zugabe eines Reagenzes, das eine Verbindung der Formel (I) 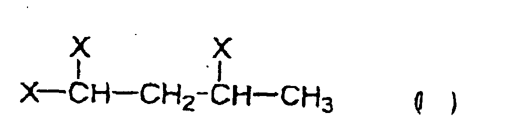 umfasst, in der X eine Gruppe der Formel (II) 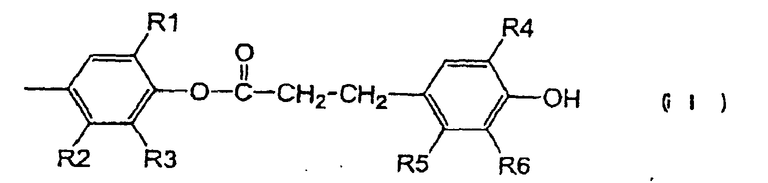 ist, in der R1 und R4 identisch oder verschieden sind und jeweils Alkyl mit 1 bis 8 Kohlenstoffatomen sind, R2, R3, R5 und R6 identisch oder verschieden sind und jeweils ein Wasserstoffatom oder Alkyl mit 1 bis 8 Kohlenstoffatomen sind, zu dem Harzmaterial, wobei das Harzmaterial aus thermoplastischen Harzen und wärmehärtbaren Harzen ausgewählt ist, und die Menge der Verbindung der Formel (I) 0,01 bis 10 Gewichtsteile pro 100 Gewichtsteile des Harzes beträgt.

10. Verfahren zur Hemmung des durch Chlor verursachten Abbaus eines Harzmaterials gemäß Anspruch 9, das weiterhin die Zugabe eines Phosphor-Antioxidationsmittels zum Harzmaterial umfasst.

11. Verfahren zur Hemmung des durch Chlor verursachten Abbaus eines Harzmaterials gemäß Anspruch 9, das weiterhin die Zugabe eines phenolischen Antioxidationsmittels, das von der Verbindung der Formel (I) verschieden ist, zu dem Harzmaterial umfasst.

12. Verfahren zur Hemmung des durch Chlor verursachten Abbaus eines Harzmaterials gemäß Anspruch 9, das weiterhin die Zugabe eines Schwermetall-Deaktivators zu dem Harzmaterial umfasst.

13. Verfahren zur Hemmung des durch Chlor verursachten Abbaus eines Harzmaterials gemäß Anspruch 9, das weiterhin die Zugabe eines Phosphor-Antioxidationsmittels, eines phenolischen Antioxidationsmittels, das von der Verbindung der Formel (I) verschieden ist, und eines Schwermetall-Deaktivators zu dem Harzmaterial umfasst.

14. Verfahren gemäß einem der Ansprüche 9 bis 13, wobei das Harzmaterial ein Polyolefinharz umfasst.

15. Verfahren zur Hemmung des Abbaus eines geformten Harz-Gegenstandes durch Chlor, umfassend die Zugabe eines Reagenzes, das eine Verbindung der Formel (I) 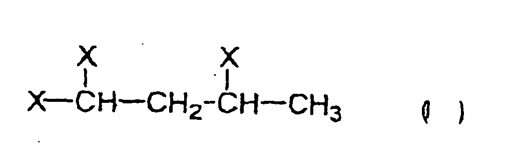 umfasst, in der X eine Gruppe der Formel (II) 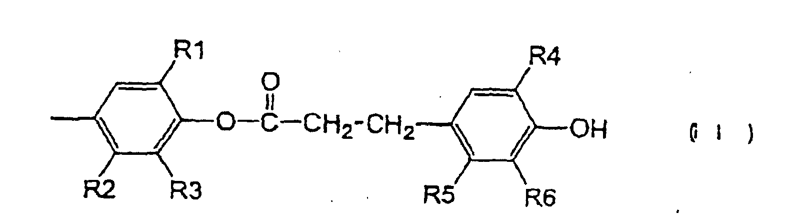 ist, in der R1 und R4 identisch oder verschieden sind und jeweils Alkyl mit 1 bis 8 Kohlenstoffatomen sind, R2, R3, R5 und R6 identisch oder verschieden sind und jeweils ein Wasserstoffatom oder Alkyl mit 1 bis 8 Kohlenstoffatomen sind, zu dem geformten Harz-Gegenstand, wobei das Harzmaterial aus thermoplastischen Harzen und wärmehärtbaren Harzen ausgewählt ist, und die Menge der Verbindung der Formel (I) 0,01 bis 10 Gewichtsteile pro 100 Gewichtsteile des Harzes beträgt.

16. Verfahren zur Hemmung des durch Chlor verursachten Abbaus eines geformten Harz-Gegenstandes gemäß Anspruch 15, das weiterhin die Zugabe eines Phosphor-Antioxidationsmittels zu dem geformten Harz-Gegenstand umfasst.

17. Verfahren zur Hemmung des durch Chlor verursachten Abbaus eines geformten Harz-Gegenstandes gemäß Anspruch 15, das weiterhin die Zugabe eines phenolischen Antioxidationsmittels, das von der Verbindung der Formel (I) verschieden ist, zu dem geformten Harz-Gegenstand umfasst.

18. Verfahren zur Hemmung des durch Chlor verursachten Abbaus eines geformten Harz-Gegenstandes gemäß Anspruch 15, das weiterhin die Zugabe eines Schwermetall-Deaktivators zu dem geformten Harz-Gegenstand umfasst.

19. Verfahren zur Hemmung des durch Chlor verursachten Abbaus eines geformten Harz-Gegenstandes gemäß Anspruch 15, das weiterhin die Zugabe eines Phosphor-Antioxidationsmittels, eines phenolischen Antioxidationsmittels, das von der Verbindung der Formel (I) verschieden ist, und eines Schwermetall-Deaktivators zu dem geformten Harz-Gegenstand umfasst.

20. Verfahren gemäß einem der Ansprüche 15 bis 19, wobei das Harz ein Polyolefin-Harz ist.

## Revendications

1. Utilisation d'un composé de formule (I) 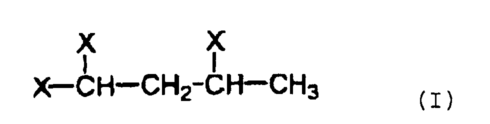 dans laquelle X est un groupe de formule (II) 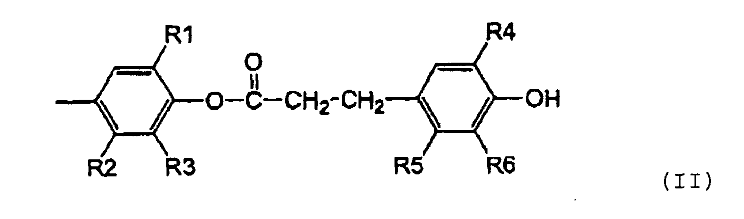
dans laquelle R1 et R4 sont identiques ou différents et chacun est un groupe alkyle ayant de 1 à 8 atomes de carbone, R2, R3, R5 et R6 sont identiques ou différents et chacun est un atome d'hydrogène ou un groupe alkyle ayant de 1 à 8 atomes de carbone pour inhiber la dégradation des résines par le chlore, dans laquelle les résines sont choisies parmi les résines thermoplastiques et les résines thermodurcissables.

2. Utilisation selon la revendication 1, dans laquelle le composé de formule (I) est au moins un élément choisi parmi
le 1,1,3-tris (2-méthyl-4- (3- (3,5-di-tert-butyl-4-hydroxyphényl) propionyloxy) -5-tert-butylphényl) butane,
le 1,1,3-tris(3-méthyl-4-(3-(3,5-di-tert-butyl-4-hydroxyphényl) propionyloxy) -5-tert-butylphényl) butane,
le 1,1,3-tris (3-méthyl-4- (3-(3-méthyl-5-tert-butyl-4-hydroxyphényl) propionyloxy)-5-tert-butylphényl)butane, et
le 1,1,3-tris(2-méthyl-4-(3-(3-méthyl-5-tert-butyl-4-hydroxyphényl)propionyloxy)-5-tert-butylphényl)butane.

3. Composition de résine résistante à l'eau chlorée, qui comprend
(i) une résine choisie parmi les résines thermoplastiques et les résines thermodurcissables ;
(ii) un composé de formule (I) 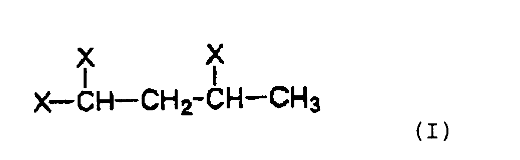 dans laquelle X est un groupe de formule (II) 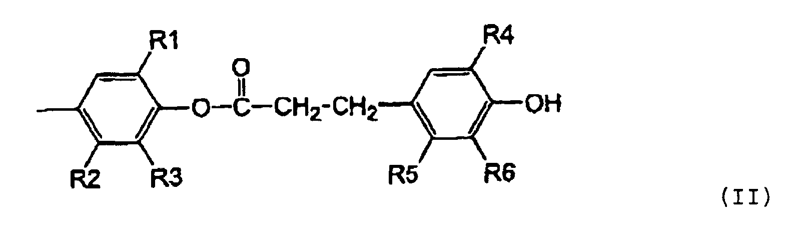 dans laquelle R1 et R4 sont identiques ou différents et chacun est un groupe alkyle ayant de 1 à 8 atomes de carbone, R2, R3, R5 et R6 sont identiques ou différents et chacun est un atome d'hydrogène ou un groupe alkyle ayant de 1 à 8 atomes de carbone,
(iii) un antioxydant à base de phosphore,
(iv) un antioxydant phénolique autre que le composé de formule (I), et
(v) un désactivateur de métal lourd,
dans laquelle la quantité du composé de formule (I) est de 0,01 à 10 parties en poids pour 100 parties en poids de résine.

4. Composition selon la revendication 3, dans laquelle le composé de formule (I) est au moins un élément choisi dans le groupe A suivant, Groupe A :
le 1,1,3-tris(2-méthyl-4-(3-(3,5-di-tert-butyl-4-hydroxyphényl)propionyloxy)-5-tert-butylphényl)butane,
le 1,1,3-tris(3-méthyl-4-(3-(3,5-di-tert-butyl-4-hydroxyphényl)propionyloxy)-5-tert-butylphényl)butane,
le 1,1,3-tris(3-méthyl-4-(3-(3-méthyl-5-tert-butyl-4-hydroxyphényl)propionyloxy)-5-tert-butylphényl)butane, et
le 1,1,3-tris (2-méthyl-4-(3-(3-méthyl-5-tert-butyl-4-hydroxyphényl) propionyloxy) -5-tert-butylphényl)butane ;
l'antioxydant à base de phosphore est au moins un élément choisi dans le groupe B suivant,
Groupe B :
le phosphite de tris(2,4-di-tert-butylphényle),
le diphosphonite de tétrakis(2,4-di-tert-butylphényl)-4,4'-biphénylène,
le diphosphonite de tétrakis(2,4-di-tert-butyl-5-méthylphényl)-4,4'-biphénylène,
le diphosphite de bis(2,4-di-tert-butylphényl)-pentaérythritol,
le diphosphite de bis(2,6-di-tert-butyl-4-méthylphényl)pentaérythritol,
le phosphite de 2,2'-méthylènebis(4,6-di-tert-butylphényl)-2-éthylhexyle,
le phosphite de (2,4,6-tri-tert-butylphényl)-2-butyl-2-éthyl-1,3-propanediol,
le phosphite de 2,2',2" -nitrilo (triéthyltris-(3,3',5,5'-tétra-tert-butyl-1,1'-biphényl-2,2'-diyle)),
le diphosphite de distéarylpentaérythritol, et
le triphosphite d'hexatridécyl-1,1,3-tris(2-méthyl-4-hydroxy-5-tert-butylphényl)butane ;
l'antioxydant phénolique autre que le composé de formule (I) est au moins un élément choisi dans le groupe C' et le groupe C" suivants,
Groupe C' :
la vitamine E, et
le 2,6-di-tert-butyl-4-méthylphénol,
Groupe C' ' :
le 1,3,5-triméthyl-2,4,6-tris(3,5-di-tert-butyl-4-hydroxybenzyl)benzène,
le tétrakis(3-(3,5-di-tert-butyl-4-hydroxyphényl)-propionate) de pentaérythrityle,
l'isocyanurate de 1,3,5-tris(3,5-di-tert-butyl-4-hydroxybenzyle),
l'isocyanurate de 1,3,5-tris(4-tert-butyl-3-hydroxy-2,6-diméthylbenzyle),
le 1,1,3-tris(2-méthyl-4-hydroxy-5-tert-butylphényl)butane, et
le butyrate de bis(3,3-bis(3-tert-butyl-4-hydroxyphényle)) éthylène glycol ; et
le désactivateur de métal lourd est au moins un élément choisi dans le groupe D suivant,
Groupe D :
la N,N'-bis(3-(3,5-di-tert-butyl-4-hydroxyphényl)-propionyl)hydrazine,
le N,N'-bis(2-(3-(3,5-di-tert-butyl-4-hydroxyphényl)propionyloxy)éthyl)oxamide,
le phosphite de tris(2-tert-butyl-4-(3-tert-butyl-4-hydroxy-6-méthylphénylthio)-5-méthylphényle),
le disalicyloylhydrazide d'acide décanedicarboxylique, et
le 3-(N-salicyloyl)amino-1,2,4-triazole.

5. Composition selon la revendication 4, dans laquelle l'antioxydant phénolique autre que le composé de formule (I) est au moins un élément choisi parmi
le 1,3,5-triméthyl-2,4,6-tris(3,5-di-tert-butyl-4-hydroxy-benzyl) benzène,
le tétrakis(3-(3,5-di-tert-butyl-4-hydroxyphényl)propionate) de pentaérythrityle, et
le butyrate de bis (3,3-bis (3-tert-butyl-4-hydroxyphényle)) éthylène glycol.

6. Composition selon la revendication 5, dans laquelle le composé de formule (I) est
le 1,1,3-tris(2-méthyl-4-(3-(3,5-di-tert-butyl-4-hydroxyphényl) propionyloxy)-5-tert-butylphényle)butane;
l'antioxydant à base de phosphore est au moins un élément choisi parmi le phosphite de tris(2,4-di-tert-butylphényle) et
le diphosphonite de tétrakis(2,4-di-tert-butylphényl)-4,4'-biphénylène ; et
le désactivateur de métal lourd est au moins un élément choisi parmi la N,N'-bis(3-(3,5-di-tert-butyl-4-hydroxy-phényl)propionyl)hydrazine et
le disalicyloylhydrazide d'acide décanedicarboxylique.

7. Composition selon la revendication 6, dans laquelle l'antioxydant à base de phosphore est
le phosphite de tris(2,4-di-tert-butylphényle) ; et
l'antioxydant phénolique autre que le composé de formule (I) est au moins un élément choisi parmi le 1,3,5-triméthyl-2,4,6-tris (3,5-di-tert-butyl-4-hydroxybenzyl)benzène, et le tétrakis(3-(3,5-di-tert-butyl-4-hydroxyphényl)propionate) de pentaérythrityle.

8. Composition selon l'une quelconque des revendications 3 à 7, dans laquelle la résine est une résine polyoléfinique.

9. Procédé d'inhibition de la dégradation d'une résine par le chlore, qui comprend l'ajout à la résine d'un agent comprenant un composé de formule (I) 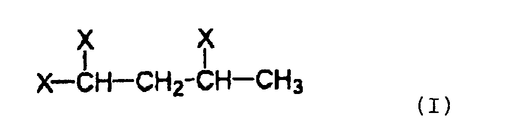 dans laquelle X est un groupe de formule (II) 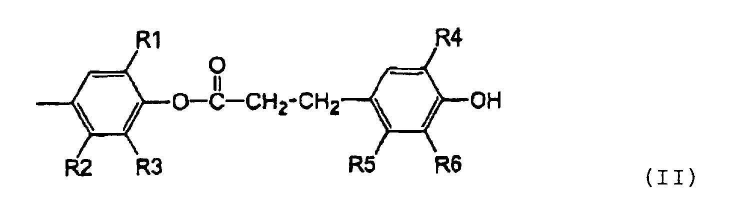 dans laquelle R1 et R4 sont identiques ou différents et chacun est un groupe alkyle ayant de 1 à 8 atomes de carbone, R2, R3, R5 et R6 sont identiques ou différents et chacun est un atome d'hydrogène ou un groupe alkyle ayant de 1 à 8 atomes de carbone, dans laquelle la résine est choisie parmi des résines thermoplastiques et des résines thermodurcissables, et la quantité du composé de formule (I) est de 0,01 à 10 parties en poids pour 100 parties en poids de résine.

10. Procédé d'inhibition de la dégradation d'une résine provoquée par le chlore selon la revendication 9, comprenant en outre l'ajout d'un antioxydant à base de phosphore à la résine.

11. Procédé d'inhibition de la dégradation d'une résine provoquée par le chlore selon la revendication 9, comprenant en outre l'ajout d'un antioxydant phénolique autre que le composé de formule (I) à la résine.

12. Procédé d'inhibition de la dégradation d'une résine provoquée par le chlore selon la revendication 9, comprenant en outre l'ajout d'un désactivateur de métal lourd à la résine.

13. Procédé d'inhibition de la dégradation d'une résine provoquée par le chlore selon la revendication 9, comprenant en outre l'ajout d'un antioxydant à base de phosphore, d'un antioxydant phénolique autre que le composé de formule (I), et d'un désactivateur de métal lourd à la résine.

14. Procédé selon l'une quelconque des revendications 9 à 13, dans lequel la résine comprend une résine polyoléfinique.

15. Procédé d'inhibition de la dégradation par le chlore d'un article en résine formé, qui comprend l'ajout à l'article en résine formé d'un agent comprenant un composé de formule (I) 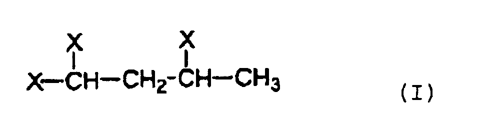 dans laquelle X est un groupe de formule (II) 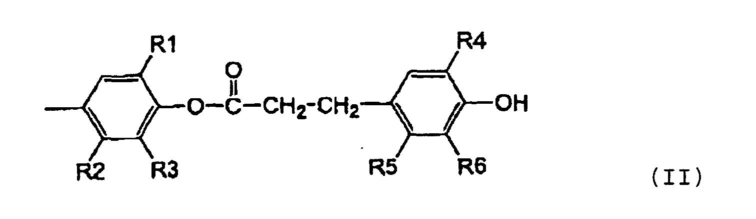 dans laquelle R1 et R4 sont identiques ou différents et chacun est un groupe alkyle ayant de 1 à 8 atomes de carbone, R2, R3, R5 et R6 sont identiques ou différents et chacun est un atome d'hydrogène ou un groupe alkyle ayant de 1 à 8 atomes de carbone, dans laquelle la résine est choisie parmi des résines thermoplastiques et des résines thermodurcissables, et la quantité du composé de formule (I) est de 0,01 à 10 parties en poids pour 100 parties en poids de résine.

16. Procédé d'inhibition de la dégradation par le chlore d'un article en résine formé selon la revendication 15, comprenant en outre l'ajout d'un antioxydant à base de phosphore à l'article en résine formé.

17. Procédé d'inhibition de la dégradation par le chlore d'un article en résine formé selon la revendication 15, comprenant en outre l'ajout d'un antioxydant phénolique autre que le composé de formule (I) à l'article en résine formé.

18. Procédé d'inhibition de la dégradation par le chlore d'un article en résine formé selon la revendication 15, comprenant en outre l'ajout d'un désactivateur de métal lourd à l'article en résine formé.

19. Procédé d'inhibition de la dégradation par le chlore d'un article en résine formé selon la revendication 15, comprenant en outre l'ajout d'un antioxydant à base de phosphore, d'un antioxydant phénolique autre que le composé de formule (I), et d'un désactivateur de métal lourd à l'article en résine formé.

20. Procédé selon l'une quelconque des revendications 15 à 19, dans lequel la résine est une résine polyoléfinique.
